# EUROPÄISCHE PATENTSCHRIFT

(11) **EP 4 463 784 B1**
(45) Veröffentlichungstag und Bekanntmachung des Hinweises auf die Patenterteilung: **28.01.2026**
(21) Anmeldenummer: 23713311.1
(22) Anmeldetag: 08.03.2023
(51) Int. Cl.: G06F 21/52, G06F 21/57, G06F 21/53, G06F 9/455

(54) **DYNAMISCHE INTEGRITÄTSÜBERWACHUNG EINER AUF EINEM GASTRECHNER AUSGEFÜHRTEN CONTAINER-LAUFZEITUMGEBUNG**
DYNAMIC INTEGRITY MONITORING OF A CONTAINER RUNTIME ENVIRONMENT EXECUTED ON A HOST COMPUTER
SURVEILLANCE DYNAMIQUE DE L'INTÉGRITÉ D'UN ENVIRONNEMENT D'EXÉCUTION DE CONTENEUR S'EXÉCUTANT SUR UN DISPOSITIF DE CALCULE HÔTE

(30) Priorität: 21.03.2022 EP 22163245
(43) Veröffentlichungstag der Anmeldung: 20.11.2024
(73) Patentinhaber: Siemens Aktiengesellschaft, 80333 München (DE)
(72) Erfinder: KNIERIM, Christian, 81373 München (DE); MAIER, Thomas, 85614 Kirchseeon (DE)
(74) Vertreter: Siemens Patent Attorneys
(86) Internationale Anmeldenummer: PCT/EP2023/055854
(87) Internationale Veröffentlichungsnummer: WO 2023/180069

(56) Entgegenhaltungen:
- US-A1- 2018 314 846
- US-A1- 2020 218 798
- US-A1- 2021 133 312

## Beschreibung

Die Erfindung betrifft Verfahren zur dynamischen Integritätsüberwachung einer auf einem Gastrechner ausgeführten Container-Laufzeitumgebung, auf der mindestens ein Container ausgeführt und mittels einer Orchestrierungsvorrichtung verwaltet wird.

Containervirtualisierung ist eine Methode, bei der mehrere Instanzen eines Betriebssystems isoliert voneinander einen Betriebssystemkern eines Gastrechners nutzen können. Software Container, im Weiteren kurz Container genannt, stellen somit eine leichtgewichtige Art der Virtualisierung einer Laufzeitumgebung auf einem Gastrechner, auch Hostsystem genannt, dar und kapseln eine in einem Container betriebene Software-Anwendung vom darunterliegenden Gastrechner ab. Software-Anwendungen werden mittlerweile in vielen Bereichen durch den Einsatz von Container-Technologie implementiert, beispielsweise in der Industrieautomation und der Prozesssteuerung, aber auch in Transportsystemen oder der Gebäudeautomatisierung.

Um einen Container auf dem Gastrechner starten zu können, wird ein Containerimage benötigt, welches neben der Anwendungssoftware auch die für die Anwendungssoftware erforderlichen Binärprogramme und Bibliotheken enthält. Aus dem Containerimage wird auf dem Gastrechner ein Container, genauer eine Containerinstanz, erstellt und auf der Laufzeitumgebung des Gastrechners ausgeführt.

Eine orchestrierte Laufzeitumgebung umfasst einen Orchestrierer und mindestens ein, meist eine Vielzahl von Gastrechner, auch als Knoten bezeichnet, die dem Orchestrierer zugeordnet sind. Der Orchestrierer startet, verwaltet und beendet Containerinstanzen auf den zugeordneten Gastrechnern. Typische orchestrierte Laufzeitumgebungen sind hierbei Kubernetes-basierte Containerumgebungen, die entweder Cloud-basierte Container-as-a-Services-Umgebungen oder in einer Cloud betriebene virtuelle Instanzen als Knoten einer orchestrierten Laufzeitumgebung verwalten.

Neben einer Verwendung von orchestrierten Laufzeitumgebungen im IT-Umfeld werden diese auch im industriellen Internet of Things (IoT)-Umfeld eingesetzt. Bei Geräten, die im industriellen Umfeld als Knoten einer orchestrierten Laufzeitumgebung betrieben werden, ist es im Gegensatz zu dem oben beschriebenen typischen Kubernetes-Szenario nicht üblich, dass Containerinstanzen kurzlebig, typischerweise maximal 24 Stunden, auf dem Gerät betrieben werden, sondern über einen längeren Zeitraum, **d.h.** mehrere Tage bis Wochen, ohne Unterbrechung laufen. Erhält ein Angreifer unberechtigten Zugriff auf einen Knoten, kann dieser zusätzliche Software auf dem von der zentralen Orchestrierungseinheit verwalteten Knoten installieren oder diesen modifizieren. Insbesondere können in solchen Umgebungen unter anderem Containerinstanzen parallel zu den von der Orchestrierungskomponente verwalteten Instanzen gestartet werden ohne dass der Orchestrierer Kenntnis davon erlangt oder diesen Vorgang verhindern kann.

Bekannte Integritätsüberwachungssysteme können durch den Orchestrierer veranlasste dynamische Start- und Stopp-Vorgänge einzelner Containerinstanzen nicht optimal erkennen, sondern basieren auf einem statischen Regelwerk, das gegebenenfalls durch Abfrage von Orchestrierer-spezifischer Deployment-Informationen erweitert werden. Zur Erstellung des statischen Regelwerks, müssen sämtliche Anwendungsfälle bekannt sein bzw. da dies selten der Fall ist, müssen die Regelwerke sehr großzügig definiert werden.

US 2018/314846 A1 beschreibt eine hierarchische Anordnung von Sicherheitsrichtlinien für eine Gast-Laufzeitumgebung GRE, die auf unterschiedlichen Ebenen der Ausführungsumgebung implementiert ist. Unterschiedliche Sicherheitsrichtlinien sind beispielsweise in einem Container, in einer Virtuellen Maschine, die mehrere Container ausführen kann, und auf einem Host, der wiederum mehrere Virtuelle Maschinen bereitstellt, implementiert und decken unterschiedliche Funktionen ab. Eine Sicherheitsrichtlinie für die Gastlaufzeitumgebung kann spezifisch für die Gastlaufzeitumgebung sein und auch Sicherheitsrichtlinien von höheren Ebenen erben.

US 2020/0218798 Al offenbart einen Policy-Interpreter, der erkennt, dass ein Anwendungscontainer in einem Containersystem hinzugefügt wurde, öffnet das gespeicherte Manifest für den Anwendungscontainer, ermittelt Informationen zu den laufenden Diensten und generiert daraufhin eine Sicherheitsrichtlinie für den Anwendungscontainer. Diese Sicherheitsrichtlinie wird in einem Sicherheitscontainer geladen, der Aktionen des Anwendungscontainers blockiert, wenn sie nicht mit den definierten Aktionen übereinstimmen, und die Sicherheitsrichtlinie wird anschließend in einem grafischen Benutzeroberflächen-Container zur Präsentation für den Benutzer übermittelt.

US 2021/0133312 Al offenbart eine Überprüfung eines Umgebungstyps, die eine manipulationssichere Validierung der Rechenumgebung ermittelt, deren Informationen dann zur Richtlinienverwaltung genutzt werden können, um den Austausch von Richtlinien zwischen Host- und Container-Umgebungen zu erleichtern.

Es ist somit eine Aufgabe der vorliegenden Erfindung, ein Verfahren zu schaffen, welches automatisch und in Abhängigkeit einer vom Orchestrierer definierten Laufzeitkonfiguration eine Integritätsüberwachung eines Knotens durchführen kann und somit auf dem Zielknoten einen Abgleich durchführen kann, ob Instanzen tatsächlich vom Orchestrierer gestartet wurden und die vom Orchestrierer vorgegebene Laufzeitkonfiguration sämtlicher auf dem Knoten betriebener Instanzen identisch zu den Vorgaben des Orchestrierers sind. Es ist Insbesondere eine Aufgabe der Erfindung das Aktualisieren der Gastrechner-spezifischen Integritätsrichtlinie auch dann zu erreichen, wenn das Beenden durch den Gastrechner veranlasst wird oder aufgrund eines Absturzes beendet wird.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur dynamischen Integritätsüberwachung einer auf einem Gastrechner ausgeführten Container-Laufzeitumgebung, auf der mindestens ein Container ausgeführt und mittels einer Orchestrierungsvorrichtung verwaltet wird, umfassend die Schritte:
in der Orchestrierungsvorrichtung,
   - beim Starten einer Containerinstanz auf der Container-Laufzeitumgebung durch die Orchestrierungsvorrichtung, Erstellen einer Instanz-spezifischen Integritätsregel betreffend mindestens eine Ressource des Gastrechners, die zur Ausführung der Containerinstanz zugeteilt ist,
   - Hinzufügen der Instanz-spezifischen Integritätsregel zu einer Gastrechner-spezifischen Integritätsrichtlinie, die für jede auf der Container-Laufzeitumgebung des Gastrechners bereits ausgeführte Containerinstanz eine Instanz-spezifische Integritätsregel umfasst und in der Orchestrierungsvorrichtung angeordnet ist,
   - Übermitteln der Gastrechner-spezifischen Integritätsrichtlinie an den Gastrechner,
im Gastrechner,
   - Überprüfen der auf dem Gastrechner durch Containerinstanzen zugewiesene Ressourcen gegenüber der Gastrechner-spezifischen Integritätsrichtlinie, und
   - Ausgeben einer Alarmnachricht, wenn beim Überprüfen ein Verstoß gegen die Gastrechner-spezifische Integritätsrichtlinie ermittelt wurde.

Die Instanz-spezifische Integritätsregel umfasst eine oder eine Vielzahl von Integritätsregeln, die jeweils eine oder mehrere Ressourcen des Gastrechners betreffen, die der Containerinstanz zugewiesen sind. Die Gastrechner-spezifische Integritätsrichtlinie bezieht sich auf den kompletten Gastrechner, **d.h.** auf alle auf der Laufzeitumgebung ausgeführten Containerinstanzen und die dazu verwalteten Ressourcen des Gastrechners. Die Gastrechner-spezifische Integritätsrichtlinie wird für jeden von der Orchestrierungsvorrichtung verwalteten Gastrechner beispielsweise bei der Zuordnung des Gastrechners zur Orchestrierungseinheit oder beim ersten Start einer Containerinstanz auf dem Gastrechner erstellt. Die Gastrechner-spezifische Integritätsrichtlinie wird bei jedem weiteren von der Orchestrierungsvorrichtung veranlassten Start einer Containerinstanz auf dem Gastrechner aktualisiert und somit dynamisch aktualisiert. Durch das Übermitteln und Überprüfen der Gastrechner-spezifische Integritätsrichtlinie im Gastrechner können nicht von der Orchestrierungsvorrichtung gestartete Containerinstanzen oder von der Konfiguration der gestarteten Containerinstanz abweichende Ressourcen über die gesamte Laufzeit der Containerinstanz identifiziert werden. Durch das Integrieren der Instanz-spezifische Integritätsregel kann auch für den Gastrechner selbst eine Integritätsüberwachung durchführt geführt werden.

Gemäß der Erfindung umfasst das Verfahren die weiteren Schritte:
- Empfangen einer Mitteilung in der Orchestrierungsvorrichtung, wenn eine der Containerinstanzen auf dem Gastrechner beendet wird, und
- Übermitteln einer bezüglich der Mitteilung aktualisierten Gastrechner-spezifischen Integritätsrichtlinie, an Gastrechner.

Die Gastrechner-spezifische Integritätsrichtlinie wird somit nicht nur aktualisiert, wenn die Orchestrierungsvorrichtung ein Beenden der Containerinstanz veranlasst, sondern auch dann, wenn das Beenden durch den Gastrechner veranlasst wird oder aufgrund eines Absturzes beendet wird.

In einer vorteilhaften Ausführungsform wird die Gastrechner-spezifische Integritätsrichtlinie aktualisiert, wenn ein Ereignis in der Orchestrierungsvorrichtung erkannt wird, das die Zusammensetzung und/oder Konfiguration der Container-instanzen auf dem Gastrechner verändert, und die aktualisierten Gastrechner-spezifische Integritätsrichtlinie wird an den Gastrechner übermittelt.

Somit wird die Gastrechner-spezifische Integritätsrichtlinie bei einer Änderung der Zusammensetzung, **d.h.** welche und wie viele Containerinstanzen, aber auch bei einer Änderung der Konfiguration, bspw. der zugewiesenen Ressourcen, der auf dem Gastrechner laufenden Container-Instanzen durch die Orchestrierungsvorrichtung angepasst.

In einer vorteilhaften Ausführungsform ist das Ereignis mindestens eine der folgenden Aktionen: ein Ausfallen einer Containerinstanz auf dem Gastrechner, ein Starten einer neuen Containerinstanz auf dem Gastrechner, eine Aktualisierung der Containerinstanz entsprechend einem geänderten Containerimage, Erkennung eines Applikationsabsturzes und Neustart von betroffenen Containerinstanzen auf dem Gastrechner.

In einer vorteilhaften Ausführungsform wird die Instanz-spezifische Integritätsregel abhängig von Information zu einem Containerimage, aus dem die Containerinstanz aufgebaut wird, erstellt.

Durch die Instanz-spezifische Integritätsregel kann für den Gastrechner selbst eine Integritätssicherung durchgeführt werden. Die Instanz-spezifische Integritätsregel abhängig von Information zum Containerimage hat den Vorteil, dass diese für weitere Containerinstanzen vom gleichen Containerimage lediglich dupliziert und wiederverwendet werden kann.

In einer vorteilhaften Ausführungsform wird die Instanz-spezifische Integritätsregel abhängig von Information aus einer Bereitstellungsinformation, die die Konfiguration der Containerinstanz beim Start der Containerinstanz auf der jeweiligen Container-Laufzeitumgebung vorgibt, erstellt.

Dies ist insbesondere dann vorteilhaft, wenn die Konfiguration der innerhalb des Containerimages definierten Dienstes oder das Ziel von Schreiboperationen außerhalb des Containerimages und insbesondere über Bereitstellungs-spezifische Variablen oder Konfigurationsdateien definiert werden. Ein konkretes Beispiel stellt die Bereitstellung eines Werbservers dar, der innerhalb einer mikrosegmentierten Applikation mehrfach in unterschiedlichen Kontexten eingesetzt wird. Z.B**.** gibt es Containerinstanzen für die Frontend-Komponente, die nach außen exponiert werden und nicht-exponierte Container-instanzen im Backend, die für die Gesamtapplikation Informationen zuliefern und beispielsweise Performance-Daten einer Steuerungsanlage bereitstellen, die im Frontend angezeigt werden.

In einer vorteilhaften Ausführungsform wird die Gastrechner-spezifische Integritätsrichtlinie und/oder die einzelnen darin enthaltenen Instanz-spezifischen Integritätsregeln mittels einer digitalen Signatur der Orchestrierungsvorrichtung geschützt.

Der Gastrechner kennt den zugehörigen öffentlichen Schlüssel der Orchestrierungsvorrichtung und kann somit die Integrität der Richtlinie bzw. Regeln sowie die signierende Vorrichtung, **d.h.** die Orchestrierungseinheit überprüfen. Eine durch einen Angreifer modifizierte Richtlinie oder Regel kann somit identifiziert werden. Die signierende Orchestrierungseinheit kann validiert werden.

In einer vorteilhaften Ausführungsform betrifft das Überprüfen der Gastrechner-spezifische Integritätsrichtlinie die den Containerinstanzen zugewiesenen Ressourcen eines Dateisystems und/oder Netzwerkverbindungsressourcen und/oder Prozessressourcen und/oder ausführbare Programmdateien.

Somit werden alle für die Ausführung der Containerinstanzen auf dem Gastrechner benötigten Ressourcenarten überprüft.

In einer vorteilhaften Ausführungsform wird das Überprüfen zumindest eines Teils der Gastrechner-spezifischen Integritätsrichtlinien außerhalb des Gastrechners durchgeführt.

Dies ermöglicht eine einfache Überprüfung von aus dem Gastrechner ausgelagerten Ressourcen, die von den Container-instanzen genutzt werden, beispielsweise ausgelagert Speicherkapazitäten.

In einer vorteilhaften Ausführungsform wird die Alarmnachricht an eine zentrale Alarmierungsvorrichtung weitergeleitet, und Alarmaktionen werden entsprechend einer Alarmierungsrichtlinie von der Alarmierungsvorrichtung ausführt.

Somit können Alarmaktionen einheitlich für alle angebundenen Gastrechner einfach festgelegt und bereitgestellt werden.

In einer vorteilhaften Ausführungsform weist die Gastrechner-spezifischen Integritätsrichtlinie eine vorgegebene maximale Gültigkeitsdauer auf und/oder die Gastrechner-spezifischen Integritätsrichtlinie wird in zyklischen Zeitabständen aktualisiert.

Somit kann verhindert werden, dass alte Gastrechner-spezifische Integritätsrichtlinien von einem Angreifer gesichert und weitere Aktualisierungen durch einen Angreifer unterbunden werden können.

Gemäß einem zweiten Aspekt betrifft die Erfindung ein System zur dynamischen Integritätsüberwachung einer auf einem Gastrechner ausgeführten Container-Laufzeitumgebung, auf der mindestens eine Containerinstanz ausgeführt und mittels einer Orchestrierungsvorrichtung verwaltet wird, umfassend
den Gastrechner, umfassend eine Container-Laufzeitumgebung, sowie
   - eine Empfangseinheit, die derart ausgebildet ist, eine Gastrechner-spezifischen Integritätsrichtlinie zu empfangen,
   - eine Integritätserkennungseinheit, die derart ausgebildet ist, mindestens einer Containerinstanz zugewiesene Ressourcen gegenüber der Gastrechner-spezifischen Integritätsrichtlinie zu überprüfen, und
   - eine Ausgabeeinheit, die derart ausgebildet ist, eine Alarmnachricht auszugeben, wenn beim Überprüfen ein Verstoß gegen die Gastrechner-spezifischen Integritätsrichtlinie ermittelt wurde, und
die Orchestrierungsvorrichtung, umfassend
eine Integritätseinheit, die derart ausgebildet ist,
   - beim Starten einer Containerinstanz auf der Container-Laufzeitumgebung durch die Orchestrierungsvorrichtung eine Instanz-spezifische Integritätsregel betreffend mindestens eine Ressource des Gastrechners, die zur Ausführung der Container-instanz zugeteilt ist, zu erstellen, und
   - die Instanz-spezifische Integritätsregel zu einer Gastrechner-spezifischen Integritätsrichtlinie, die für jede auf der Container-Laufzeitumgebung des Gastrechners bereits ausgeführte Containerinstanz eine Instanz-spezifische Integritätsregel umfasst und in der Orchestrierungsvorrichtung angeordnet ist, hinzuzufügen, und
eine Ausgabeeinheit, die derart ausgebildet ist, die Gastrechner-spezifischen Integritätsrichtlinie an den Gastrechner zu übermitteln, dadurch gekennzeichnet, dass
das System derart konfiguriert ist die zusätzlichen Verfahrensschritte auszuführen:
   - Empfangen einer Mitteilung in der Orchestrierungsvorrichtung (11), wenn eine der Containerinstanzen (18) auf dem Gastrechner (12) beendet wird, und
   - Übermitteln einer bezüglich der Mitteilung aktualisierten Gastrechner-spezifischen Integritätsrichtlinie (15) an Gastrechner (12).

Gemäß einem dritten Aspekt betrifft die Erfindung einen Gastrechner, umfassend eine Container-Laufzeitumgebung, sowie
- eine Empfangseinheit, die derart ausgebildet ist, eine Gastrechner-spezifische Integritätsrichtlinie zu empfangen,
- eine Integritätserkennungseinheit, die derart ausgebildet ist, mindestens einer Containerinstanz zugewiesene Ressourcen gegenüber der Gastrechner-spezifischen Integritätsrichtlinie zu überprüfen, und
- eine Ausgabeeinheit, die derart ausgebildet ist, eine Alarmnachricht auszugeben, wenn beim Überprüfen ein Verstoß gegen die Gastrechner-spezifischen Integritätsrichtlinie **er**mittelt wurde.

Gemäß einem vierten Aspekt betrifft die Erfindung eine Orchestrierungsvorrichtung, umfassend
eine Integritätseinheit, die derart ausgebildet ist,
   - beim Starten einer Containerinstanz auf der Container-Laufzeitumgebung durch die Orchestrierungsvorrichtung eine Instanz-spezifischen Integritätsregel betreffend mindestens eine Ressource des Gastrechners, die zur Ausführung der Containerinstanz zugeteilt ist, zu erstellen, und
   - die Instanz-spezifische Integritätsregel zu einer Gastrechner-spezifischen Integritätsrichtlinie, die für jede auf der Container-Laufzeitumgebung des Gastrechners bereits ausgeführte Containerinstanz eine Instanz-spezifische Integritätsregel umfasst und in der Orchestrierungsvorrichtung angeordnet ist, hinzuzufügen, und
eine Orchestrierungsschnittstelle, die derart ausgebildet ist, die Gastrechner-spezifische Integritätsrichtlinie an den Gastrechner zu übermitteln.

Das System sowie der Gastrechner und die Orchestrierungsvorrichtung sind derart ausgebildet das beschriebene Verfahren auszuführen.

Das System sowie die Orchestrierungsvorrichtung und der Gastrechner weisen die gleichen Vorteile wie das Verfahren auf.

Ein fünfter Aspekt der Erfindung betrifft ein Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens durchzuführen.

Sofern es in der nachfolgenden Beschreibung nicht anders angegeben ist, beziehen sich die Begriffe "starten", "erstellen", "hinzufügen", "übermitteln", "überprüfen", "Ausgeben" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse.

Das System und darin optional enthaltene Komponenten, wie beispielsweise die Orchestrierungsvorrichtung und der Gastrechner und dergleichen kann bzw. können einen oder mehrere Prozessoren, umfassen. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln.

Ein Computerprogrammprodukt, wie z. B. ein Computerprogrammmittel, kann beispielsweise als Speichermedium, wie zum Beispiel einer Speicherkarte, USB-Stick, CD-ROM, DVD oder auch in Form einer herunterladbaren Datei von einem Server in einem Netzwerk bereitgestellt oder geliefert werden.

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen:
- Fig. 1: ein Ausführungsbeispiel des erfindungsgemäßen Verfahrens als Flussdiagramm;
- Fig. 2: eine Ausführungsbeispiel eines erfindungsgemäßen Systems in schematischer Darstellung;
- Fig. 3: eine Ausführungsbeispiel einer erfindungsgemäßen Orchestrierungsvorrichtung in schematischer Darstellung; und
- Fig. 4: eine Ausführungsbeispiel eines erfindungsgemäßen Gastrechners in schematischer Darstellung.

Einander entsprechende Teile sind in allen Figuren mit den gleichen Bezugszeichen versehen.

Bekannte bestehende Integritätsüberwachungssysteme können durch den Orchestrierer veranlasste dynamische Start- und Stopp-Vorgänge einzelner Containerinstanzen nicht optimal erkennen, sondern basieren auf einem statischen Regelwerk, das gegebenenfalls durch Abfrage von Orchestrierer-spezifischen Deployment-Informationen erweitert werden. Mit diesen Verfahren werden die Operationen oder Dateisystemänderungen auf den orchestrierten Knoten überwacht, arbeiten allerdings unabhängig von der vorgegebenen Laufzeitkonfiguration des Orchestrierers. Bestehende, nicht vom Orchestrierer gestartete Instanzen können somit nur erkannt werden, wenn eine Anomalieerkennungskomponente zur Laufzeit Zugriff auf beispielsweise Metadaten des Orchestrierers erhält. Wird die Verbindung zwischen dem Orchestrierer und dem Knoten unterbrochen oder ist der Angreifer in der Lage, eine identische Deployment-Information für eine Containerinstanz, ohne den Orchestrierer zu erzeugen, kann dies mit den bestehenden Verfahren nicht erkannt werden. Gleiches gilt für einen eventuellen Lizensierungs-Anwendungsfall, bei dem beispielsweise sichergestellt werden soll, dass Container für eine Anwendungen ausschließlich über den Orchestrierer installiert werden sollen, nicht jedoch manuell auf dem Gerät installiert werden soll.

Die grundlegende Idee der Erfindung besteht darin, dass eine Orchestrierungsvorrichtung bzw. ein Management-System eines oder mehrerer Knoten neben der Orchestrierung der auf den Knoten zu betreibenden Container-Instanz zusätzlich zur Bereitstellungsinformation dynamisch in Abhängigkeit der von der Orchestrierungsvorrichtung vorgegebenen Laufzeitkonfiguration geräte-spezifische Integritätsrichtlinien erstellt und für diese optional mit Hilfe einer Signatur eine Integritätssicherung durchführt. Im Weiteren wird ein von der Orchestrierungsvorrichtung verwalteter Knoten als Gastrechner bezeichnet.

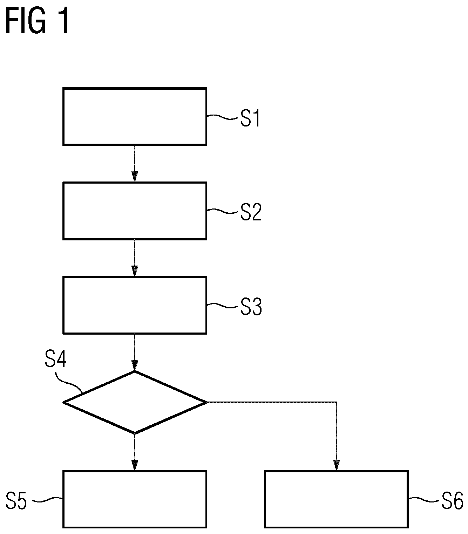

Anhand des Flussdiagramms in Fig. 1 wird nun das erfindungsgemäße Verfahren zur dynamischen Integritätsüberwachung einer auf einem Gastrechner ausgeführten Container-Laufzeitumgebung, auf der mindestens ein Container ausgeführt und mittels der Orchestrierungsvorrichtung verwaltet wird, genauer beschrieben. Dazu wird eine Gastrechner-spezifische Integritätsrichtlinie in Abhängigkeit der einzelnen auf dem Gerät bzw. auf der Container-Laufzeitumgebung des Gastrechner ausgeführten Containerinstanzen erstellt. Die Gastrechner-spezifische Integritätsrichtlinie umfasst einen statischen Teil, der Integritätsregeln für das Gesamtbetriebssystem des Gastrechners enthält, und der um die Instanz-spezifische Aspekte erweitert wird. Durch den statischen Teil der Gastrechner-spezifischen Integritätsrichtlinie wird für den Gastrechner selbst bzw. für das Betriebssystem des Gastrechners eine Integritätsüberwachung durchgeführt.

Für einzelne Containerinstanzen werden zunächst isoliert Instanz-spezifische Integritätsregeln definiert. Dazu werden von der Orchestrierungsvorrichtung folgende Schritte ausgeführt. Im ersten Verfahrensschritt S1 wird Beim Starten einer Containerinstanz auf der Container-Laufzeitumgebung durch die Orchestrierungsvorrichtung eine Instanz-spezifischen Integritätsregel betreffend mindestens eine Ressource des Gastrechners, die zur Ausführung der Containerinstanz zugeteilt ist, erstellt.

Die Instanz-spezifische Integritätsregel wird abhängig von Information zu einem Containerimage, aus dem die Container-instanz aufgebaut wird, erstellt. Diese Information zu dem Containerimage kann beispielsweise aus Meta-Informationen zum Containerimage ermittelt werden. Alternativ oder zusätzlich kann die Instanz-spezifische Integritätsregel abhängig von Information aus einer Bereitstellungsinformation, die die Konfiguration der Containerinstanz beim Start der Container-instanz auf der jeweiligen Container-Laufzeitumgebung vorgibt, erstellt werden. Die auf die Bereitstellungsinformation beruhende Variante ist vorzuziehen, sofern beispielsweise ein Ziel von Schreiboperationen oder eine Konfiguration von innerhalb des Containerimages definierten Services außerhalb des Containerimages und insbesondere über Bereitstellungs-spezifische Variablen oder Konfigurationsdateien definiert werden. In beiden Varianten können mehrere Instanz-spezifische Integritätsregeln mit Hilfe von einer oder mehreren digitalen Signaturen der Orchestrierungsvorrichtung miteinander verbunden werden. Die Gastrechner-spezifische Integritätsrichtlinie wird mittels einer digitalen Signatur der Orchestrierungsvorrichtung geschützt.

Anschließend wird die mindestens eine Instanz-spezifische Integritätsregel zu einer Gastrechner-spezifischen Integritätsrichtlinie hinzugefügt, siehe Schritt S2. Die Gastrechner-spezifischen Integritätsrichtlinie ist in der Orchestrierungsvorrichtung angeordnet und umfasst für jede auf der Container-Laufzeitumgebung des Gastrechners bereits ausgeführte Containerinstanz mindestens eine Instanz-spezifische Integritätsregel. Gastrechner-spezifischen Integritätsrichtlinie wird beispielsweise bei einer Zuordnung eines Gastrechners zur Orchestrierungsvorrichtung oder beim Starten einer ersten Containerinstanz auf dem Gastrechner in der Orchestrierungsvorrichtung erzeugt. Die Gastrechner-spezifische Integritätsrichtlinie wird von der Orchestrierungsvorrichtung an den Gastrechner übermittelt, siehe S3 und die Container.

Bei der Erstellung des dynamischen Teils der Gastrechner-spezifischen Integritätsrichtlinie wird durch die Orchestrierungsvorrichtung sichergestellt, dass sich die durch das Containerimage und/oder durch die Bereitstellungsinformation vorgegebenen Instanz-spezifischen Integritätsregeln ausschließlich auf die in der Containerinstanz bzw. in der Bereitstellungsinformation definierten Ressourcen beziehen und nicht Bedingungen für den Gastrechner selbst oder die Ressourcen anderer Deployments, d.h. Applikationen, die durch Containerinstanzen auf dem gleichen Gastrechner ausgeführt werden, beziehen. Grund hierfür ist, dass der Ersteller eines Integritätsregelwerk nur für seine eigene Applikation Integritätsregeln bzw. -richtlinien erstellen können sollte. Dies kann erreicht werden, indem überprüft wird, ob die mit dem Deployment verbundenen Integritätsregeln sich ausschließlich auf Ressourcen des Deployments beziehen oder auf das Image bzw. die daraus erzeugte Instanz selbst beziehen.

Der Gastrechner überprüft die Ressourcen, die den auf dem Gastrechner ausgeführten Containerinstanzen zugewiesen sind, gegenüber der Gastrechner-spezifischen Integritätsrichtlinie, siehe Schritt S4. Stimmen die zugewiesenen Ressourcen nicht mit den Vorgaben aus der Gastrechner-spezifischen Integritätsrichtlinie überein, wird eine Alarmnachricht ausgegeben, siehe Schritt S5. Stimmen die zugewiesenen Ressourcen mit den Vorgaben aus der Gastrechner-spezifischen Integritätsrichtlinie überein, wird die Überprüfung ohne weitere Aktion beendet, siehe Schritt S6. Optional kann die Überprüfung, der Zeitpunkt der Überprüfung und das Überprüfungsergebnis protokolliert und abgespeichert werden. Die ermöglicht eine zeitliche Einordnung einer Abweichung zwischen tatsächlich zugewiesenen Ressourcen und Gastrechner-spezifischen Integritätsrichtlinie.

Um eine Gastrechner-spezifische Integritätsüberwachungsrichtline in Abhängigkeit der aktuell für eine Anwendung ausgeführten Containerinstanzen erstellen zu können, aktualisiert die Orchestrierungsvorrichtung bei jeder den Gastrechner betreffenden Änderung die Gastrechner-spezifische Integritätsrichtline. Dazu wird in der Orchestrierungsvorrichtung eine Mitteilung vom Gastrechner empfangen, wenn eine der Containerinstanzen auf dem Gastrechner beendet wird. Daraufhin wird in der Orchestrierungsvorrichtung die Gastrechner-spezifischen Integritätsrichtlinie entsprechend der Mitteilung aktualisiert und an den Gastrechner übermittelt.

Wird eine der Containerinstanz beendet oder fällt diese aus, sendet der Gastrechner aktiv die Mitteilung an die Orchestrierungsvorrichtung. Alternativ oder zusätzlich sendet die Orchestrierungsvorrichtung eine Abfrage über den Status an den Gastrechner. Verwaltet die Orchestrierungsvorrichtung mehrere Gastrechner so führt die Orchestrierungsvorrichtung die beschriebenen Schritte mit jedem der verwalteten Gastrechner aus. Ein erkannter Ausfall einer oder mehrerer der Containerinstanzen hat zur Folge, dass die Orchestrierungsvorrichtung die Instanz-spezifischen Integritätsregeln für die nicht mehr existierenden Containerinstanzen aus der Gastrechner-spezifischen Integritätsrichtlinie entfernt und eine aktualisierte neue Gastrechner-spezifische Integritätsrichtline erzeugt und an den Gastrechner übermittelt.

Die Gastrechner-spezifische Integritätsrichtlinie wird immer dann aktualisiert, wenn ein Ereignis, das die Zusammensetzung und/oder die Konfiguration der Containerinstanzen auf dem Gastrechner verändert, in der Orchestrierungsvorrichtung erkannt wird, und die aktualisierte Gastrechner-spezifische Integritätsrichtlinie an den Gastrechner übermittelt wird. Relevante Ereignisse die zu einer Aktualisierung der Gastrechner-spezifischen Integritätsrichtlinie führen sind hierbei das Starten mindestens einer neuen Containerinstanzen, beispielsweise durch Up-/Downscaling zur Bereitstellung größerer Ressourcen für eine Anwendung, das Einspielen mindestens eines aktualisierten Containerimages durch Anpassung der Bereitstellungskonfiguration an der Orchestrierungsvorrichtung, sofern diese Bereitstellung Änderungen auf den gewünschten Gastrechner hat, eine Erkennung von Applikationsabstürzen und deren Neustart durch die Orchestrierungsvorrichtung, gegebenenfalls auf einem anderen Gastrechner gemäß Scheduling-Policy.

Bei einer Integritätssicherung sollte die dynamisch generierte Gastrechner-spezifische Integritätsrichtlinie auch eine maximale Gültigkeitsdauer aufweisen und diese nicht nur ereignisbezogen aktualisiert werden. Die Gastrechner-spezifischen Integritätsrichtlinie weist eine vorgegebene maximale Gültigkeitsdauer auf. Alternativ und/oder zusätzlich wird die Gastrechner-spezifischen Integritätsrichtlinie in zyklischen Zeitabständen aktualisiert.

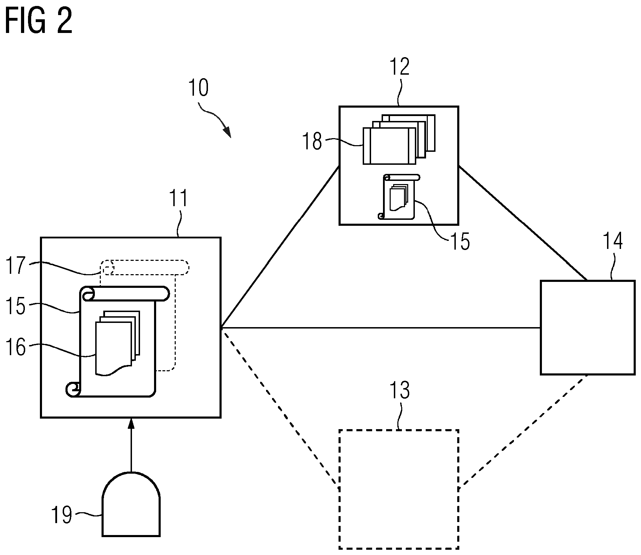

Fig. 2 zeigt ein Anwendungsbeispiel des Verfahrens in einem erfindungsgemäßen System 10 umfassend eine Orchestrierungsvorrichtung 11 und einen Gastrechner 12. Das System 10 kann weitere Gastrechner, hier Gastrechner 13 umfassen, die von der Orchestrierungsvorrichtung 11 verwaltet werden. Die Orchestrierungsvorrichtung 11 erstellt und aktualisiert für jeden einzelnen dieser Gastrechner 12, 13 eine Gastrechner-spezifische Integritätsrichtlinie, beispielsweise die Gastrechner-spezifische Integritätsrichtlinie 15 für Gastrechner 12 und die Gastrechner-spezifische Integritätsrichtlinie 17 für Gastrechner 13. Die Gastrechner-spezifische Integritätsrichtlinie 15 umfasst für jede auf dem Gastrechner 12 ausgeführte Containerinstanz 18 eine Instanz-spezifische Integritätsregel 16.

Anhand des Systems 10 wird das Einspielen einer Container-instanz durch einen Benutzer 19 beschrieben. Nachdem die Orchestrierungsvorrichtung 11 den Gastrechner 12 für eine Ausführung der Containerinstanz ausgewählt wurde, erhält die Orchestrierungsvorrichtung 11 von der Container-Laufzeitumgebung auf dem Gastrechner 12 eine Instanzkennung der zu überwachenden Containerinstanz 18 und erstellt aus der Bereitstellungsinformation der Containerinstanz 18 die damit verbundene Instanz-spezifische Integritätsregel 16 und/oder aus der Containerimage-Signatur die damit verbundene Instanz-spezifische Integritätsregel 16 einen dynamischen Teil der Gastrechner-spezifische Integritätsrichtlinie 15. Die Instanzkennung kann von der Orchestrierungsvorrichtung noch durch einen den Gastrechner kennzeichnenden Kenner ergänzt werden. Der dynamische Teil sowie ein statischer Teil mit Integritätsregeln für das Betriebssystem des Gastrechners bilden die Gastrechner-spezifischen Integritätsrichtlinie, die mit einem kryptographischen Schlüssel der Orchestrierungsvorrichtung 11 signiert wird. Anschließend wird die Gastrechner-spezifische Integritätsrichtlinie 15 an den Gastrechner 12 übermittelt. Im nächsten Schritt wird beispielsweise Containerinstanz 18 gestartet.

Durch die Instanz-spezifische Zuordnung, d.h. die verbundene Instanz-spezifische Integritätsregel 16 wird erreicht, dass eine Alarmierung durchgeführt werden kann, sobald außerhalb der Orchestrierungsvorrichtung 11 gestartete Containerinstanzen erkannt werden.

Das Überprüfen der Gastrechner-spezifischen Integritätsrichtlinie 15 betrifft die den Containerinstanz en 18zugewiesenen Ressourcen eines Dateisystems und/oder Netzwerkverbindungsressourcen und/oder Prozessressourcen des Gastrechners 12. Ausgeführt wird ein solches Verfahren beispielsweise durch eine "Catch-All"-Regel, bei der Prozesse sämtlicher unbekannter Containerinstanzen per Default einen Alarm auslösen.

Anhand der Geräte-spezifische Integritätsrichtlinie 15 kann somit die Integrität des Dateisystems des Gastrechners 12 geprüft werden. Wird dessen Integrität zyklisch ermittelt, wird üblicherweise eine Referenzdatenbank für die zu überwachenden Dateien und Verzeichnisse sowie deren Metadaten ermittelt. Alternativ können Integritätsverletzungen direkt mit Hilfe entsprechender dynamisch generierter Auditregeln oder eBPF-Programme (extended Berkeley Packet Filter) ermittelt werden. Sofern eine Erkennung über Referenzdatenbanken durchgeführt wird, müssen für jede nicht-exklusive Dateisystemressource sowohl innerhalb der Containerinstanz 18 als auch außerhalb des Containerinstanz 18 die Integritätsüberwachung deaktiviert werden. Wird eine Ressource nicht mehr genutzt, da eine Containerinstanz 18 gelöscht wird, die Containerinstanz 18 ausfällt oder geplant beendet wird, wird der Status der Containerinstanz entweder direkt durch eine aktive Mitteilung durch den Gastrechner 12 oder durch zyklische Überwachung des Gastrechners 12 durch den Orchestrierungsvorrichtung 11 mitgeteilt. Die Orchestrierungsvorrichtung 11 kann für die beendete Containerinstanz definierten Einträge der Integritätsdatenbank neu berechnen und muss nicht die Referenzdatenbank komplett errechnen.

Die Überprüfung von Integritätsregeln für Prozesse können sowohl innerhalb der Prozessnamensräume einzelner Container-instanzen als auch auf dem darunterliegenden Gastrechner gestartete Prozesse bezüglich Integrität überwacht werden. Um die Integritätsüberwachung Containerinstanz-bezogen und Gastrechner-bezogen durchführen zu können, muss die Integritätsüberwachung erkennen, ob ein Prozess zu einer Container-instanz gehört. Dies erfolgt mithilfe von mindestens einem eBPF-Programm oder mindestens einem Kernel-Modul, welche die erzeugten Systemaufrufe (system calls) sowie deren Übergabeparameter ermitteln.

Anhand von Integritätsregeln für Netzwerkverbindungen kann für jede Instanz überwacht werden, welche Netzwerkverbindungen erwartet werden und bei Verstößen der Richtlinie einen Alarm auslösen. Auch hier kann die Erfassung über entsprechende eBPF-Programme oder Kernel-Module erfolgen, die spezielle System Calls erfassen und deren Übergabeparameter analysieren.

Sobald eine Integritätsverletzung auf dem Gastrechner 12 festgestellt wird, wird eine Alarmnachricht erzeugt, die an eine Alarmierungsvorrichtung 14, die bevorzugt zentral angeordnet ist und Alarmnachrichten von mehreren Gastrechner 12, 13 oder auch für mehrere Orchestrierungsvorrichtungen 11 bearbeitet, übermittelt wird. In der Alarmierungsvorrichtung werden Alarmaktionen entsprechend einer Alarmierungsrichtlinie ausführt und an die Orchestrierungsvorrichtung 11 weitergeleitet. Abhängig von den Alarmaktionen in der Alarmierungsrichtline wird final eine Operation auf dem Orchestrierungsvorrichtung 11 durchgeführt. Beispielsweise wird der Gastrechner 12 für Containerinstanzen eines vorgegebenen Containertyps aus einem Scheduling ausgeschlossen.

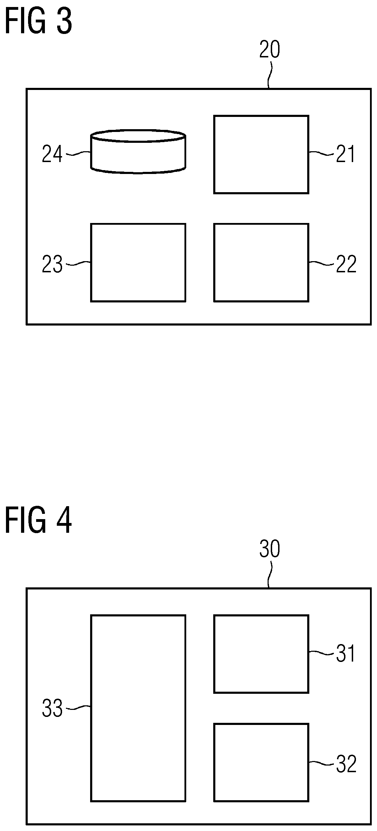

Fig. 3 zeigt eine Ausführungsform einer erfindungsgemäßen Orchestrierungsvorrichtung 20. Die Orchestrierungsvorrichtung 20 umfasst eine Benutzerschnittstelle 21, über die eine Containerinstanz von einem Benutzer empfangen wird. Die Orchestrierungsvorrichtung 20 umfasst eine Orchestrierungsschnittstelle 22, über die die Gastrechner-spezifische Integritätsrichtlinie an einen von der Orchestrierungsvorrichtung 20 verwalteten Gastrechner übermittelt wird. Die Orchestrierungsvorrichtung 20 umfasst des Weiteren eine Speichereinheit 24, in der die Gastrechner-spezifische Integritätsrichtlinien der verwalteten und integritätsüberwachten Gastrechner gespeichert sind. Die Orchestrierungsvorrichtung 20 umfasst eine Integritätseinheit, in der Instanz-spezifische Integritätsregeln für jede Containerinstanz erstellt und in die Gastrechner-spezifische Integritätsrichtlinie eingefügt werden.

Fig. 4 zeigt einen Gastrechner 30. Der Gastrechner 33 umfasst eine Eingabeeinheit, die derart ausgebildet ist, eine Geräte-spezifischen Integritätsrichtlinie von einer Orchestrierungsvorrichtung zu empfangen. Der Gastrechner umfasst eine Integritätserkennungseinheit 33 zur Überprüfung und Erkennung von Integritätsverletzungen und zur Generierung einer Alarmnachricht. Für einzelne Aspekte, wie der Dateisystemintegritäts-überwachung kann auf einer vom Gastrechner getrennten, ausgelagerten Vorrichtung eine Referenzdatenbank ausgebildet sein, die den gesicherten Gastrechner von dort aus über erteilte Kommandos überwachen.

Die Integritätserkennungseinheit 32 ist derart ausgebildet Alarmnachrichten zu generieren und über eine Ausgabeeinheit 21 an eine zentrale Alarmierungsvorrichtung weiterzuleiten.

Sofern die Geräte-spezifischen Integritätsrichtlinie mittels einer Signatur integritätsgesichert ist, kann die auf dem Gastrechner betriebene Integritätserkennungseinheit 33 überprüfen, ob die Geräte-spezifischen Integritätsrichtlinie kompromittiert wurde. Sofern die Integritätserkennungseinheit 33 eine kompromittierte Geräte-spezifischen Integritätsrichtlinie erkennt, wird ebenfalls eine Alarmierung ausgelöst. Ab diesem Zeitpunkt wird auch der gesamte Gastrechner 30 als kompromittiert betrachtet.

Die Geräte-spezifische Integritätsrichtlinie wird somit für die verwalteten Gastrechner dynamisch bei jeder Konfigurationsänderung bezüglich laufender Containerinstanzen durch die Orchestrierungsvorrichtung angepasst und bezieht sich auf den kompletten Gastrechner. Durch die Gastrechner-spezifische dynamische Erstellung der Integritätsrichtlinie kann die Orchestrierungsvorrichtung erkennen, wenn neben den von ihr definierten Containerinstanzen auch außerhalb der Orchestrierungsvorrichtung verwaltete Containerinstanzen betrieben werden. Als kompromittiert erkannte Gastrechner können durch eine Alarmierungsrichtline von der Orchestrierungsvorrichtung für das Scheduling definierter oder sämtlicher Container-instanzen ausgeschlossen werden.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur dynamischen Integritätsüberwachung einer auf einem Gastrechner (12) ausgeführten Container-Laufzeitumgebung, auf der mindestens eine Containerinstanz (18) ausgeführt und mittels einer Orchestrierungsvorrichtung (11) verwaltet wird, umfassend die Schritte:
in der Orchestrierungsvorrichtung (11),
- beim Starten der Containerinstanz (18) auf der Container-Laufzeitumgebung durch die Orchestrierungsvorrichtung (11), Erstellen (S1) einer Instanz-spezifischen Integritätsregel (16) betreffend mindestens eine Ressource des Gastrechners (12), die zur Ausführung der Containerinstanz (18) zugeteilt ist,
- Hinzufügen (S2) der Instanz-spezifische Integritätsregel (16) zu einer Gastrechner-spezifischen Integritätsrichtlinie (15), die für jede auf der Container-Laufzeitumgebung des Gastrechners (12) bereits ausgeführte Containerinstanz eine Instanz-spezifische Integritätsregel (16) umfasst und in der Orchestrierungsvorrichtung (11) angeordnet ist,
- Übermitteln (S3) der Gastrechner-spezifischen Integritätsrichtlinie (15) an den Gastrechner (12),
im Gastrechner,
- Überprüfen (S4) der auf dem Gastrechner (12) durch Containerinstanzen (18) zugewiesene Ressourcen gegenüber der Gastrechner-spezifischen Integritätsrichtlinie (15), und
- Ausgeben (S5) einer Alarmnachricht, wenn beim Überprüfen ein Verstoß gegen die Gastrechner-spezifischen Integritätsrichtlinie (15) ermittelt wurde, **gekennzeichnet durch** die zusätzlichen Verfahrensschritte:
- Empfangen einer Mitteilung in der Orchestrierungsvorrichtung (11), wenn eine der Containerinstanzen (18) auf dem Gastrechner (12) beendet wird, und
- Übermitteln einer bezüglich der Mitteilung aktualisierten Gastrechner-spezifischen Integritätsrichtlinie (15) an Gastrechner (12).

2. Verfahren nach Anspruch 1, wobei die Gastrechner-spezifische Integritätsrichtlinie (15) aktualisiert wird, wenn ein Ereignis, das die Zusammensetzung und/oder Konfiguration der Containerinstanzen (18) auf dem Gastrechner (12) verändert, in der Orchestrierungsvorrichtung (11) erkannt wird, und die aktualisierte Gastrechner-spezifische Integritätsrichtlinie (15) an den Gastrechner (12) übermittelt wird.

3. Verfahren nach Anspruch 2, wobei das Ereignis mindestens eine der folgenden Aktionen ist: ein Ausfallen einer Containerinstanz auf dem Gastrechner (12), ein Starten einer neuen Containerinstanz (18) auf dem Gastrechner (12), eine Aktualisierung der Containerinstanz (18) entsprechend einem geänderten Containerimage, Erkennung eines Applikationsabsturzes und Neustart von betroffenen Containerinstanzen (18) auf dem Gastrechner (12).

4. Verfahren nach einem der vorangehenden Ansprüche, wobei die Instanz-spezifische Integritätsregel (16) abhängig von Information zu einem Containerimage, aus dem die Container-instanz (18) aufgebaut wird, erstellt wird.

5. Verfahren nach einem der vorangehenden Ansprüche, wobei die Instanz-spezifische Integritätsregel (16) abhängig von Information aus einer Bereitstellungsinformation, die die Konfiguration der Containerinstanz (18) beim Start der Containerinstanz (18) auf der jeweiligen Container-Laufzeitumgebung vorgibt, erstellt wird.

6. Verfahren nach einem der vorangehenden Ansprüche, wobei die Gastrechner-spezifische Integritätsrichtlinie (15) und/oder die einzelnen darin enthaltenen Instanz-spezifischen Integritätsregeln (16) mittels einer digitalen Signatur der Orchestrierungsvorrichtung (11) geschützt wird.

7. Verfahren nach einem der vorangehenden Ansprüche, wobei das Überprüfen der Gastrechner-spezifischen Integritätsrichtlinie (15) die den Containerinstanzen (18) zugewiesenen Ressourcen eines Dateisystems und/oder Netzwerkverbindungsressourcen und/oder Prozessressourcen betrifft.

8. Verfahren nach einem der vorangehenden Ansprüche, wobei das Überprüfen zumindest eines Teils der Gastrechner-spezifischen Integritätsrichtlinie (15) außerhalb des Gastrechners (12) durchgeführt wird.

9. Verfahren nach einem der vorangehenden Ansprüche, wobei die Alarmnachricht an eine zentrale Alarmierungsvorrichtung (14) weitergeleitet wird, und Alarmaktionen entsprechend einer Alarmierungsrichtlinie von der Alarmierungsvorrichtung (14) ausführt werden.

10. Verfahren nach einem der vorangehenden Ansprüche, wobei die Gastrechner-spezifische Integritätsrichtlinie (15) eine vorgegebene maximale Gültigkeitsdauer aufweist und/oder die Gastrechner-spezifische Integritätsrichtlinie (15) in zyklischen Zeitabständen aktualisiert wird.

11. Gastrechner (12, 30), umfassend eine Container-Laufzeitumgebung, sowie
- eine Empfangseinheit (31), die derart ausgebildet ist, eine Gastrechner-spezifischen Integritätsrichtlinie (15) zu empfangen,
- eine Integritätserkennungseinheit (33), die derart ausgebildet ist, mindestens einer Containerinstanz (18) zugewiesene Ressourcen gegenüber der Gastrechner-spezifischen Integritätsrichtlinie (15) zu überprüfen, und
- eine Ausgabeeinheit (32), die derart ausgebildet ist, einer Alarmnachricht auszugeben, wenn beim Überprüfen ein Verstoß gegen die Gastrechner-spezifischen Integritätsrichtlinie (15) ermittelt wurde, **dadurch gekennzeichnet, dass** der Gastrechner derart konfiguriert ist die zusätzlichen Verfahrensschritte auszuführen:
- Übermitteln einer Mitteilung an die Orchestrierungsvorrichtung (11), wenn eine der Containerinstanzen (18) auf dem Gastrechner (12) beendet wird, und
- Empfangen einer bezüglich der Mitteilung aktualisierten Gastrechner-spezifischen Integritätsrichtlinie (15) im Gastrechner (12).

12. Orchestrierungsvorrichtung (11, 20), umfassend
eine Integritätseinheit (23), die derart ausgebildet ist,
- beim Starten einer Containerinstanz (18) auf der Container-Laufzeitumgebung durch die Orchestrierungsvorrichtung (11, 20) eine Instanz-spezifischen Integritätsregel (16) betreffend mindestens eine Ressource des Gastrechners (12), die zur Ausführung der Containerinstanz (18) zugeteilt ist, zu erstellen, und
- die Instanz-spezifische Integritätsregel (16) zu einer Gastrechner-spezifischen Integritätsrichtlinie (15), die für jede auf der Container-Laufzeitumgebung des Gastrechners (12, 30) bereits ausgeführte Containerinstanz (18) eine Instanz-spezifische Integritätsregel (16) umfasst und in der Orchestrierungsvorrichtung (11, 20) angeordnet ist, hinzuzufügen, und
eine Orchestrierungsschnittstelle (22), die derart ausgebildet ist, die Gastrechner-spezifischen Integritätsrichtlinie (15) an den Gastrechner (12, 30) zu übermitteln, **dadurch gekennzeichnet, dass**
die Orchestrierungsvorrichtung (11, 20) derart konfiguriert ist die zusätzlichen Verfahrensschritte auszuführen:
- Empfangen einer Mitteilung in der Orchestrierungsvorrichtung (11), wenn eine der Containerinstanzen (18) auf dem Gastrechner (12) beendet wird, und
- Übermitteln einer bezüglich der Mitteilung aktualisierten Gastrechner-spezifischen Integritätsrichtlinie (15) an Gastrechner (12).

13. System (10) zur dynamischen Integritätsüberwachung einer auf einem Gastrechner (12, 30) ausgeführten Container-Laufzeitumgebung, auf der mindestens eine Containerinstanz (18) ausgeführt und mittels einer Orchestrierungsvorrichtung (11) verwaltet wird, umfassend die Orchestrierungsvorrichtung (11, 20) nach Anspruch 12 und einen Gastrechner (12, 20) nach Anspruch 11.

14. Computerprogrammprodukt, umfassend ein nicht flüchtiges computerlesbares Medium, das direkt in einen Speicher von mindestens einem digitalen Computer ladbar ist, umfassend Programmcodeteile, die bei Ausführung der Programmcodeteile durch den mindestens einen digitalen Computer diese veranlassen, die Schritte des Verfahrens nach einem der Ansprüche 1 bis 10 durchzuführen.

## Claims

1. Method for dynamic integrity-monitoring of a container runtime environment executed on a host computer (12), in which environment at least one container instance (18) is executed and is managed by means of an orchestration device (11), comprising the steps:
in the orchestration device (11),
- creating (S1), in the course of the starting of the container instance (18) in the container runtime environment by the orchestration device (11), an instance-specific integrity rule (16) concerning at least one resource of the host computer (12) that has been allocated for the purpose of executing the container instance (18),
- adding (S2) the instance-specific integrity rule (16) to a host-computer-specific integrity guideline (15) which comprises an instance-specific integrity rule (16) for each container instance already being executed in the container runtime environment of the host computer (12) and which is arranged in the orchestration device (11),
- communicating (S3) the host-computer-specific integrity guideline (15) to the host computer (12),
in the host computer,
- checking (S4) the resources allocated on the host computer (12) by container instances (18) against the host-computer-specific integrity guideline (15), and
- outputting (S5) an alarm message if a violation of the host-computer-specific integrity guideline (15) was ascertained in the course of the checking, **characterized by** the additional method steps:
- receiving a notification in the orchestration device (11) if one of the container instances (18) on the host computer (12) is terminated, and
- communicating a host-computer-specific integrity guideline (15), updated with respect to the notification, to the host computer (12).

2. Method according to Claim 1, wherein the host-computer-specific integrity guideline (15) is updated if an event that changes the composition and/or configuration of the container instances (18) on the host computer (12) is detected in the orchestration device (11), and the updated host-computer-specific integrity guideline (15) is communicated to the host computer (12).

3. Method according to Claim 2, wherein the event is at least one of the following actions: a failure of a container instance on the host computer (12), starting of a new container instance (18) on the host computer (12), updating of the container instance (18) in accordance with an amended container image, detection of an application crash and restart of affected container instances (18) on the host computer (12).

4. Method according to one of the preceding claims, wherein the instance-specific integrity rule (16) is created in a manner depending on information relating to a container image from which the container instance (18) is constructed.

5. Method according to one of the preceding claims, wherein the instance-specific integrity rule (16) is created in a manner depending on information from an item of provisioning information that specifies the configuration of the container instance (18) at the start of the container instance (18) in the respective container runtime environment.

6. Method according to one of the preceding claims, wherein the host-computer-specific integrity guideline (15) and/or the individual instance-specific integrity rules (16) contained therein is/are protected by means of a digital signature of the orchestration device (11).

7. Method according to one of the preceding claims, wherein the checking of the host-computer-specific integrity guideline (15) concerns the resources of a file system allocated to the container instances (18), and/or concerns network-connection resources and/or process resources.

8. Method according to one of the preceding claims, wherein the checking of at least a part of the host-computer-specific integrity guideline (15) is carried out outside the host computer (12).

9. Method according to one of the preceding claims, wherein the alarm message is forwarded to a central alarm-triggering device (14), and alarm actions are executed by the alarm-triggering device (14) in accordance with an alarm-triggering guideline.

10. Method according to one of the preceding claims, wherein the host-computer-specific integrity guideline (15) has a predetermined maximum period of validity, and/or the host-computer-specific integrity guideline (15) is updated at cyclic time intervals.

11. Host computer (12, 30) including a container runtime environment and also
- a receiving unit (31) which is designed to receive a host-computer-specific integrity guideline (15),
- an integrity-detection unit (33) which is designed to check resources allocated to at least one container instance (18) against the host-computer-specific integrity guideline (15), and
- an output unit (32) which is designed to output an alarm message if a violation of the host-computer-specific integrity guideline (15) was ascertained in the course of the checking, **characterized in that** the host computer is configured to carry out the additional method steps:
- communicating a notification to the orchestration device (11) if one of the container instances (18) on the host computer (12) is terminated, and
- receiving a host-computer-specific integrity guideline (15), updated with respect to the notification, in the host computer (12).

12. Orchestration device (11, 20) including an integrity unit (23) which is designed
- to create, in the course of the starting of a container instance (18) in the container runtime environment by the orchestration device (11, 20), an instance-specific integrity rule (16) concerning at least one resource of the host computer (12) that has been allocated for the purpose of executing the container instance (18), and
- to add the instance-specific integrity rule (16) to a host-computer-specific integrity guideline (15) which comprises an instance-specific integrity rule (16) for each container instance (18) already being executed in the container runtime environment of the host computer (12, 30) and which is arranged in the orchestration device (11, 20), and
an orchestration interface (22) which is designed to communicate the host-computer-specific integrity guideline (15) to the host computer (12, 30), **characterized in that**
the orchestration device (11, 20) is configured to carry out the additional method steps:
- receiving a notification in the orchestration device (11) if one of the container instances (18) on the host computer (12) is terminated, and
- communicating a host-computer-specific integrity guideline (15), updated with respect to the notification, to the host computer (12).

13. System (10) for dynamic integrity-monitoring of a container runtime environment executed on a host computer (12, 30), in which environment at least one container instance (18) is executed and is managed by means of an orchestration device (11), including the orchestration device (11, 20) according to Claim 12 and a host computer (12, 20) according to Claim 11.

14. Computer program product comprising a non-volatile computer-readable medium which is directly loadable into a memory of at least one digital computer, comprising program code parts that, upon execution of the program code parts by the at least one digital computer, cause the latter to carry out the steps of the method according to one of Claims 1 to 10.

## Revendications

1. Procédé pour la surveillance dynamique de l'intégrité d'un environnement d'exécution de conteneur exécuté sur un ordinateur hôte (12), environnement sur lequel au moins une instance de conteneur (18) est exécutée et gérée au moyen d'un dispositif d'orchestration (11), comportant les étapes suivantes :
dans le dispositif d'orchestration (11),
- lors du démarrage de l'instance de conteneur (18) sur l'environnement d'exécution de conteneur par le dispositif d'orchestration (11), élaboration (S1) d'une règle d'intégrité spécifique à l'instance (16) concernant au moins une ressource de l'ordinateur hôte (12) qui est affectée à l'exécution de l'instance de conteneur (18),
- ajout (S2) de la règle d'intégrité spécifique à l'instance (16) à une stratégie d'intégrité spécifique à l'ordinateur hôte (15), laquelle comporte pour chaque instance de conteneur déjà exécutée sur l'environnement d'exécution de conteneur de l'ordinateur hôte (12) une règle d'intégrité spécifique à l'instance (16) et est disposée dans le dispositif d'orchestration (11),
- transmission (S3) de la stratégie d'intégrité spécifique à l'ordinateur hôte (15) à l'ordinateur hôte (12),
dans l'ordinateur hôte,
- vérification (S4) des ressources attribuées à l'ordinateur hôte (12) par le biais d'instances de conteneur (18) vis-à-vis de la stratégie d'intégrité spécifique à l'ordinateur hôte (15), et
- émission en sortie (S5) d'un message d'alerte lorsque, lors de la vérification, un non-respect de la stratégie d'intégrité spécifique à l'ordinateur hôte (15) a été déterminé, **caractérisée par** les étapes de procédé supplémentaires suivantes :
- réception d'une communication dans le dispositif d'orchestration (11) lorsque l'une des instances de conteneur (18) est arrêtée sur l'ordinateur hôte (12), et
- transmission à l'ordinateur hôte (12) d'une stratégie d'intégrité spécifique à l'ordinateur hôte (15) actualisée en ce qui concerne la communication.

2. Procédé selon la revendication 1, dans lequel la stratégie d'intégrité spécifique à l'ordinateur hôte (15) est actualisée lorsqu'un événement qui modifie la composition et/ou la configuration des instances de conteneur (18) sur l'ordinateur hôte (12) est détecté dans le dispositif d'orchestration (11), et la stratégie d'intégrité spécifique à l'ordinateur hôte (15) actualisée est transmise à l'ordinateur hôte (12).

3. Procédé selon la revendication 2, dans lequel l'événement est au moins l'une des actions suivantes : un échec d'une instance de conteneur sur l'ordinateur hôte (12), un démarrage d'une nouvelle instance de conteneur (18) sur l'ordinateur hôte (12), une actualisation de l'instance de conteneur (18) correspondant à une image de conteneur modifiée, détection d'un plantage d'application et redémarrage d'instances de conteneur (18) concernées sur l'ordinateur hôte (12).

4. Procédé selon l'une des revendications précédentes, dans lequel la règle d'intégrité spécifique à l'instance (16) est élaborée en fonction d'informations sur une image de conteneur à partir de laquelle l'instance de conteneur (18) est établie.

5. Procédé selon l'une des revendications précédentes, dans lequel la règle d'intégrité spécifique à l'instance (16) est élaborée en fonction d'informations issues d'une information de déploiement qui prédéfinit la configuration de l'instance de conteneur (18) lors du démarrage de l'instance de conteneur (18) sur l'environnement d'exécution de conteneur respectif.

6. Procédé selon l'une des revendications précédentes, dans lequel la stratégie d'intégrité spécifique à l'ordinateur hôte (15) et/ou les règles d'intégrité spécifiques à l'instance (16) individuelles contenues dans celle-ci sont protégées au moyen d'une signature numérique du dispositif d'orchestration (11).

7. Procédé selon l'une des revendications précédentes, dans lequel la vérification de la stratégie d'intégrité spécifique à l'ordinateur hôte (15) concerne les ressources d'un système de données et/ou ressources de connexion réseau et/ou ressources de processus attribuées aux instances de conteneur (18).

8. Procédé selon l'une des revendications précédentes, dans lequel la vérification d'au moins une partie de la stratégie d'intégrité spécifique à l'ordinateur hôte (15) est mise en œuvre en dehors de l'ordinateur hôte (12).

9. Procédé selon l'une des revendications précédentes, dans lequel le message d'alerte est transféré à un dispositif de mise en alerte (14) central, et des actions d'alerte correspondant à une stratégie de mise en alerte sont exécutées par le dispositif de mise en alerte (14).

10. Procédé selon l'une des revendications précédentes, dans lequel la stratégie d'intégrité spécifique à l'ordinateur hôte (15) présente une durée de validité maximale prédéfinie et/ou la stratégie d'intégrité spécifique à l'ordinateur hôte (15) est actualisée à intervalles cycliques.

11. Ordinateur hôte (12, 30), comportant un environnement d'exécution de conteneur, ainsi que
- une unité de réception (31), laquelle est conçue de sorte à recevoir une stratégie d'intégrité spécifique à l'ordinateur hôte (15),
- une unité de détection d'intégrité (33), laquelle est conçue de sorte à vérifier des ressources attribuées à au moins une instance de conteneur (18) vis-à-vis de la stratégie d'intégrité spécifique à l'ordinateur hôte (15), et
- une unité d'émission en sortie (32), laquelle est conçue de sorte à émettre en sortie un message d'alerte lorsque, lors de la vérification, un non-respect de la stratégie d'intégrité spécifique à l'ordinateur hôte (15) a été déterminé, **caractérisée en ce que** l'ordinateur hôte est configuré de sorte à exécuter les étapes de procédé supplémentaires suivantes :
- transmission d'une communication au dispositif d'orchestration (11) lorsque l'une des instances de conteneur (18) est arrêtée sur l'ordinateur hôte (12), et
- réception dans l'ordinateur hôte (12) d'une stratégie d'intégrité spécifique à l'ordinateur hôte (15) actualisée en ce qui concerne la communication.

12. Dispositif d'orchestration (11, 20), comportant une unité d'intégrité (23), laquelle est conçue de sorte à,
- lors du démarrage d'une instance de conteneur (18) sur l'environnement d'exécution de conteneur par le dispositif d'orchestration (11, 20), élaborer une règle d'intégrité spécifique à l'instance (16) concernant au moins une ressource de l'ordinateur hôte (12) qui est affectée à l'exécution de l'instance de conteneur (18), et
- ajouter la règle d'intégrité spécifique à l'instance (16) à une stratégie d'intégrité spécifique à l'ordinateur hôte (15), laquelle comporte pour chaque instance de conteneur (18) déjà exécutée sur l'environnement d'exécution de conteneur de l'ordinateur hôte (12, 30) une règle d'intégrité spécifique à l'instance (16) et est disposée dans le dispositif d'orchestration (11, 20), et
une interface d'orchestration (22), laquelle est conçue de sorte à transmettre la stratégie d'intégrité spécifique à l'ordinateur hôte (15) à l'ordinateur hôte (12, 30), **caractérisée en ce que** le dispositif d'orchestration (11, 20) est configuré de sorte à exécuter les étapes de procédé supplémentaires suivantes :
- réception d'une communication dans le dispositif d'orchestration (11) lorsque l'une des instances de conteneur (18) est arrêtée sur l'ordinateur hôte (12), et
- transmission à l'ordinateur hôte (12) d'une stratégie d'intégrité spécifique à l'ordinateur hôte (15) actualisée en ce qui concerne la communication.

13. Système (10) pour la surveillance dynamique de l'intégrité d'un environnement d'exécution de conteneur exécuté sur un ordinateur hôte (12, 30), environnement sur lequel au moins une instance de conteneur (18) est exécutée et gérée au moyen d'un dispositif d'orchestration (11), comportant le dispositif d'orchestration (11, 20) selon la revendication 12 et un ordinateur hôte (12, 20) selon la revendication 11.

14. Produit de programme informatique, comportant un support non volatil lisible par ordinateur, lequel peut être chargé directement dans une mémoire d'au moins un ordinateur numérique, comportant des parties de code de programme qui, lors de l'exécution des parties de code de programme par l'au moins un ordinateur numérique, amènent celles-ci à mettre en œuvre les étapes du procédé selon l'une des revendications 1 à 10.
